# FASCICULE DE BREVET EUROPEEN

(11) **EP 1 856 572 B1**
(45) Date de publication et mention de la délivrance du brevet: **01.10.2008**
(21) Numéro de dépôt: 06726212.1
(22) Date de dépôt: 02.03.2006
(51) Int. Cl.: G02B 27/01

(54) **IMAGEUR OPTIQUE DESTINE A LA REALISATION D'UN AFFICHEUR OPTIQUE**
OPTISCHER BILDGEBER ZUR HERSTELLUNG EINER OPTISCHEN ANZEIGE
OPTICAL IMAGER FOR PRODUCING AN OPTICAL DISPLAY

(30) Priorité: 10.03.2005 FR 0550627
(43) Date de publication de la demande: 21.11.2007
(73) Titulaire: ESSILOR INTERNATIONAL (COMPAGNIE GENERALE D'OPTIQUE), 94220 Charenton le Pont (FR)
(72) Inventeur: MOLITON, Renaud, F-94120 Charenton Le Pont (FR)
(74) Mandataire: Lenne, Laurence
(86) Numéro de dépôt international: PCT/FR2006/050188
(87) Numéro de publication internationale: WO 2006/095107

(56) Documents cités:
- US-A1- 2001 028 436
- US-A1- 2003 030 912
- US-A1- 2004 136 082
- US-B1- 6 222 677
- US-B1- 6 487 021

## Description

La présente invention concerne un imageur optique destiné à la réalisation d'un afficheur optique et à permettre la projection d'informations, de type images ou multimédia. Il peut notamment être positionné sur une monture de lunettes.

Un tel afficheur informatif peut permettre la visualisation de contenu multimédia issu d'un téléphone mobile, d'un lecteur MP4 ou de DVD, d'un ordinateur personnel, d'une console de jeu ou tout autre dispositif permettant de fournir du contenu multimédia.

Il est connu du brevet US 6 204 974 der réaliser un tel imageur. Un tel imageur optique est destiné à mettre en forme les faisceaux optiques issus d'un système électronique et optique de génération de faisceaux lumineux à partir d'un signal électronique, de type écran miniature, diode laser, diode électroluminescente. L'imageur optique dirige les faisceaux optiques vers l'oeil du porteur pour permettre la visualisation du contenu informationnel.

Cet imageur optique connu se compose d'un guide d'ondes comportant une face avant et une face arrière et dans lequel des faisceaux optiques émis d'un élément optique d'un système de génération de faisceaux optiques sont introduits par une surface d'entrée et dirigés vers l'oeil du porteur pour permettre la visualisation d'un contenu informationnel par l'intermédiaire d'un miroir dont l'angle de réflexion est de 45° et d'une lentille portée par ladite face arrière.

De par la propagation des faisceaux optiques parallèlement au plan de la lentille avec réflexion à 45° et de par l'agencement de lentille, un tel imageur présente une épaisseur relativement importante, si l'on souhaite une taille apparente de l'image projetée suffisamment grande et acceptable. Ceci est préjudiciable à l'obtention d'un système afficheur peu encombrant.

Il est par ailleurs connu du brevet 6 222 677 un imageur optique comportant un guide d'ondes comportant une face avant et une face arrière et dans lequel des faisceaux optiques émis d'un élément optique d'un système de génération de faisceaux optiques sont introduits par une surface d'entrée et dirigés vers l'oeil du porteur au travers de ladite face arrière par l'intermédiaire d'un agencement optique pour permettre la visualisation d'un contenu informationnel, lesdites faces avant et arrière du guide d'onde présentant une propriété de sélectivité angulaire en réflectance et transmittance et ledit agencement optique comprenant un miroir de Mangin et une lame quart d'onde entre ladite face avant et ledit miroir.

Un miroir de Mangin sphérique est une lentille pour laquelle une de ses faces a été rendue réfléchissante au moyen d'un traitement aluminisé ou équivalent.

Grâce à un tel imageur, il est possible d'obtenir un afficheur informatif amovible, petit et léger. Cependant, il se pose des problèmes de mise en place de la lame quart d'onde dont il très difficile d'assurer la planéité.

L'invention résout ce problème, tout en conservant un afficheur informatif amovible, petit et léger. Cet imageur est ainsi de poids minimal et, situé proche d'un verre de lunette, il ne risque pas de déséquilibrer la monture.

Pour ce faire, l'invention propose un imageur optique selon la revendication 1.

Par sélectivité angulaire en réflectance et transmittance, on entend le fait qu'une face présente une réflexion élevée de la lumière dans une certaine plage d'angle d'incidence, typiquement + ou - 10° centrée autour de 60° et, simultanément, une transmittance élevée autour de l'incidence normale, à + ou - 10° près.

L'épaisseur d'un imageur conforme à l'invention peut être de l'ordre de 4 mm.

L'utilisation d'un système avec miroir de Mangin permet de diminuer le poids des éléments optiques et autorise une compensation du chromatisme du système optique.

L'invention permet le positionnement de la puissance près de l'oeil de façon à minimiser les aberrations optiques, le vignettage et à minimiser les composants associés de l'afficheur, ce qui permet ainsi de réduire son volume global et son poids global.

L'invention permet en outre d'obtenir un guide d'onde transparent, et donc de conserver au porteur une bonne vision de l'environnement.

Avantageusement, ladite surface d'entrée est inclinée, la première réflexion des faisceaux optiques ayant lieu sur ladite face avant.

Cette configuration est particulièrement compatible avec l'encombrement de la tête du porteur.

De préférence, ledit élément optique présente une surface d'émission parallèle à ladite surface d'entrée.

De préférence, le matériau dudit miroir de Mangin est différent de celui dudit guide d'ondes.

De préférence, ledit agencement optique comprend un traitement séparateur de polarisation incliné assurant la réflexion des faisceaux optiques en direction dudit miroir et la transmission des faisceaux optiques provenant dudit miroir.

Avantageusement, ledit agencement optique comprend un contre prisme sur lequel est déposé ledit traitement séparateur de polarisation.

L'invention est décrite ci-après plus en détail à l'aide de figures ne représentant qu'un mode de réalisation préféré de l'invention.
La figure 1 est une vue de dessus d'un imageur pour illustration.
La figure 2 est une vue de dessus d'un autre imageur pour illustration.
La figure 3 est une vue de dessus d'un imageur conforme à l'invention.
La figure 4 est une vue en perspective d'un guide d'ondes spécifiquement représenté dans le cas du premier exemple illustratif.
La figure 5 est une vue en perspective d'un dispositif mécanique support faisant partie de ce guide d'ondes.

Les éléments identiques portent la même référence sur ces figures.

Un imageur optique selon l'invention comporte un guide d'ondes 1 comportant une face avant 1A et une face arrière 1 B et dans lequel des faisceaux optiques émis d'un élément optique d'un système de génération de faisceaux optiques sont introduits par une surface d'entrée 1C et dirigés vers l'oeil O du porteur au travers de la face arrière 1 B par l'intermédiaire d'un agencement optique pour permettre la visualisation d'un contenu informationnel.

Les faces avant 1A et arrière 1 B du guide d'ondes sont ici utilisées en réflexion et un écran miniature 2 constituant l'élément optique du système de génération de faisceaux optiques et émettant les faisceaux optiques vers l'imageur est disposé de telle sorte que ces faisceaux optiques sont réfléchis une pluralité de fois entre les faces avant 1A et arrière 1B réfléchissantes entre leur introduction et leur sortie de l'imageur.

Ces faces sont utilisées soit en réflexion interne totale soit en réflexion assistée par un traitement multicouche spécial assurant une haute réflexion de la lumière autour de l'angle d'incidence choisi tout en étant transparent pour une incidence normale.

Eventuellement, le guide d'ondes peut comprendre un traitement anti-reflets.

Le guide d'onde 1 est en matériau transparent non perturbateur de la vision environnementale.

Le matériau du guide d'onde est de préférence un matériau à haut indice, de façon à obtenir une plage angulaire de réflexion totale la plus élevée possible, afin de pouvoir réaliser des dispositifs d'afficheur présentant un champ de vision le plus élevé possible, c'est-à-dire une taille d'image apparente grande. Un tel matériau a généralement un nombre d'Abbe faible. A titre d'exemple, le guide d'ondes 1 peut être constitué d'un flint par exemple en SF5.

Très avantageusement, la surface d'entrée 1C est inclinée, la première réflexion des faisceaux optiques ayant lieu sur la face avant 1A. Cette inclinaison de la face d'entrée 1C et cette première réflexion sur la face avant 1A assure une disposition de l'écran miniature, dont les faisceaux optiques sont émis sensiblement perpendiculairement à son plan d'émission, qui est lui-même sensiblement parallèle à la surface d'entrée 1C, dans le prolongement de cette surface d'entrée 1C de façon à se conformer à la forme du visage du porteur. En d'autres termes, le système de génération de faisceaux optiques avec son écran miniature n'est pas disposé dans un prolongement aligné avec l'imageur, où il serait encombrant et inesthétique.

L'agencement optique dirigeant les faisceaux optiques vers l'oeil O du porteur au travers de la face arrière 1 B comprend un miroir de Mangin 3 sphérique plan-convexe et une lame quart d'onde 4 disposée entre la face avant 1 A et le miroir 3 et collée sur la face plane du miroir.

Il est à noter que le miroir de Mangin n'est pas nécessairement de forme sphérique plan-convexe, mais peut aussi présenter des faces de forme asphérique.

Afin de compenser le chromatisme introduit par la propagation dans le guide d'ondes 1, le matériau du miroir de Mangin 3 est différent de celui du guide d'ondes 1 et peut être à titre d'exemple du N-BK7.

Par ailleurs, ledit agencement optique comprend un traitement séparateur de polarisation multicouches 5 incliné positionné sur une face inclinée de moins de 45° par rapport à la face arrière 1 B, idéalement sensiblement égal à de 30°, et assurant la réflexion des faisceaux optiques en direction dudit miroir et la transmission des faisceaux optiques provenant dudit miroir. Il comporte également un contre prisme 6 sur lequel peut être déposé le traitement multicouches.

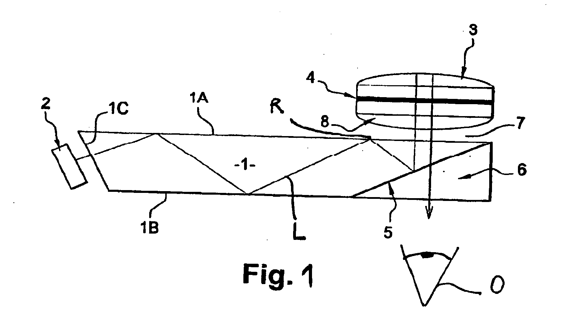

Un exemple illustratif sur la figure 1.

L'agencement optique dirigeant les faisceaux optiques vers l'oeil O du porteur au travers de la face arrière 1 B comprend ici superposés sur la face avant 1 A du guide d'ondes 1 et de l'avant vers l'arrière :
- un miroir de Mangin 3 sphérique plan-convexe,
- une lame quart d'onde 4 collée sur la face plane du miroir,
- une lentille 8 dont la face plane est collée sur la lame quart d'onde et
- une lame d'air 7.

Cet intervalle d'air 7 assure la dernière réflexion totale de propagation dans le guide d'ondes 1, illustrée sur la figure sur la face avant par le point R.

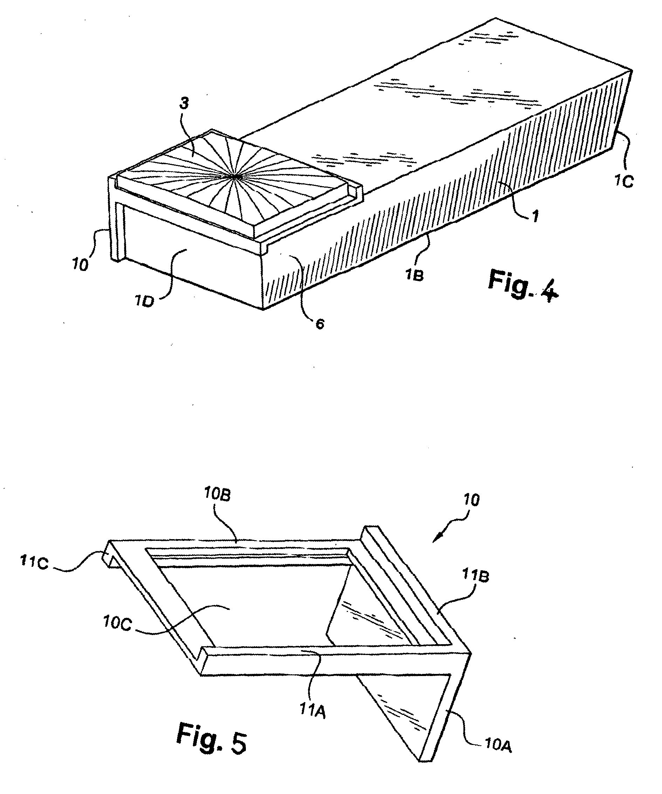

Pour réaliser cet intervalle d'air, le miroir de Mangin est fixé à l'aide d'un dispositif mécanique solidarisé sur la face avant 1A du guide d'ondes 1. Ce dispositif mécanique peut être constitué d'une ou plusieurs équerres métalliques. Un tel dispositif mécanique de support est représenté sur les figures 4 et 5 développées plus loin.

Eventuellement, la lentille 8 peut comprendre un traitement anti-reflets.

Cette lentille 8 peut aussi être de forme bi-convexe, bi-concave ou ménisque. Dans ce cas, la lame quart d'onde peut être constituée par un film ou un dépôt de couches minces

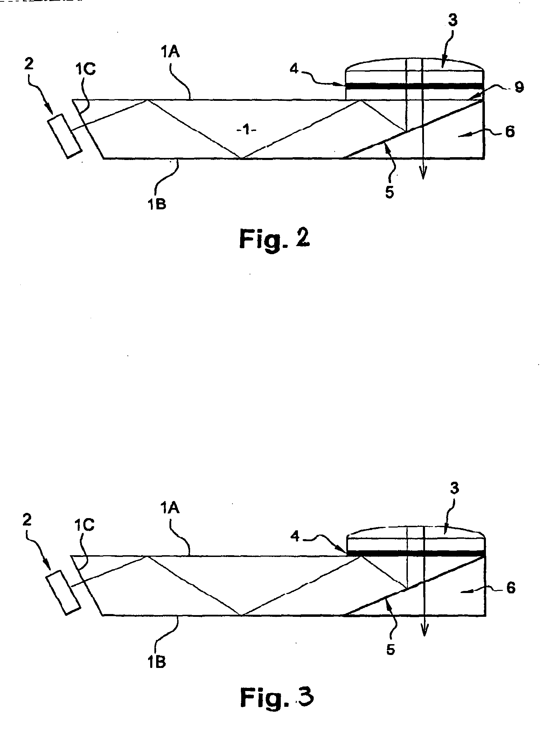

Un autre exemple illustratif est représenté sur les figures 2 et 3.

Comme représenté sur la figure 2, l'agencement optique dirigeant les faisceaux optiques vers l'oeil O du porteur au travers de la face arrière 1 B comprend ici superposés sur la face avant 1A du guide d'ondes 1 et de l'avant vers l'arrière :
- un miroir de Mangin 3 sphérique plan-convexe,
- une lame quart d'onde 4 collée sur la face plane du miroir et
- une contre lame 9 dont une face est collée à la lame quart d'onde et dont l'autre face est collée à la face avant 1A de l'imageur et est pourvue d'un traitement isolateur optique.

Cet exemple a d'une part pour avantage de supprimer la nécessité de dispositif mécanique de fixation dont le montage et la mise en oeuvre sont délicats et coûteux. Un encapsulage de la lame quart d'onde est également assuré comme plus haut.

Ce traitement isolateur assure la réflexion des faisceaux à incidence inclinée et la transmission des faisceaux proches de l'incidence normale.

Selon le mode de réalisation représenté sur la figure 3, au lieu d'utiliser une contre lame 9, il est possible de réaliser ce traitement isolateur optique directement sur la face avant 1A du guide d'onde au droit de la fixation de la lame quart d'onde 4.

Cette variante a pour avantage de réaliser un imageur particulièrement mince.

Le fonctionnement d'un imageur selon l'invention est schématisé sur les figures par la représentation de l'axe optique L d'un faisceau de lumière issu de l'écran miniature 2.

Ce faisceau est émis avec un angle d'inclinaison et est dirigé pour se réfléchir une première fois sur la face avant 1A du guide d'ondes. Après une pluralité de réflexion alternativement sur la face avant 1A et sur la face arrière 1 B du guide d'onde, il se réfléchit sur le traitement séparateur de polarisation incliné 5 vers l'avant et traverse en particulier la lame quart d'onde 4 et le miroir de Mangin 3. Il est réfléchi sur la face sphérique réfléchissante de celui-ci et est dirigé vers l'oeil O du porteur en traversant en particulier la lame quart d'onde 4 et le traitement multicouches incliné 5.

Les figures 4 et 5 illustrent un exemple de réalisation d'un dispositif mécanique support des diverses pièces optiques sur le guide d'ondes 1 ici spécifiquement représenté dans le cas du premier exemple illustratif précédemment décrite.

Ce dispositif support 10 soutient le miroir de Mangin 3 équipé de la lame quart d'onde 4 et de la lentille 8 sur la face avant 1A du guide d'ondes 1 et comporte essentiellement deux plaquettes perpendiculaires. Une plaquette 10A est destinée à venir en butée contre une face latérale du guide d'ondes 1 et l'autre plaquette 10B vient s'appuyer sur la face avant 1A. -Cette seconde plaquette 10B est évidée et reçoit au-dessus de cet évidement 10C le miroir de Mangin 3. Cet évidement 10C forme donc la lame d'air 7 sous ce miroir 3.

Cette seconde plaquette 10B comporte plusieurs brides de bordure. Deux brides 11A, 11B sont agencées perpendiculairement l'une à l'autre sur deux bords de sa face avant. Ces deux brides sont destinées à assurer le positionnement par butée du miroir de Mangin 3. Une autre bride 11C est agencée sur un bord de sa face arrière et assure le positionnement du dispositif support 10 par butée contre la face frontale 1 D opposée à la face d'entrée 1C du guide d'ondes 1.

Ce dispositif support 10 permet un positionnement relatif précis du miroir de Mangin 3 sur le guide d'ondes 1.

## Revendications

1. Imageur optique comportant un guide d'ondes (1) comportant une face avant (1A) et une face arrière (1 B) et dans lequel des faisceaux optiques émis d'un élément optique (2) d'un système de génération de faisceaux optiques sont introduits par une surface d'entrée (1 C) et dirigés vers l'oeil (O) du porteur au travers de ladite face arrière par l'intermédiaire d'un agencement optique pour permettre la visualisation d'un contenu informationnel, lesdites faces avant (1A) et arrière (1B) du guide d'onde présentant une propriété de sélectivité angulaire en réflectance et transmittance et ledit agencement optique comprenant un miroir de Mangin (3) et une lame quart d'onde (4) entre ladite face avant et ledit miroir, **caractérisé en ce que** ladite lame quart d'onde (4) est encapsulée entre ledit miroir et un autre élément et **en ce que** ledit autre élément est un traitement isolateur optique porté par ladite face avant.

2. Imageur selon la revendication 1, **caractérisé en ce que** ladite surface d'entrée (1 C) est inclinée, la première réflexion des faisceaux optiques ayant lieu sur ladite face avant.

3. Imageur selon la revendication précédente, **caractérisé en ce que** ledit élément optique (2) présente une surface d'émission parallèle à ladite surface d'entrée (1 C).

4. Imageur selon l'une des revendications précédentes, **caractérisé en ce que** le matériau dudit miroir de Mangin (3) est différent de celui dudit guide d'ondes (1).

5. Imageur selon l'une des revendications précédentes, **caractérisé en ce que** ledit agencement optique comprend un traitement séparateur de polarisation incliné (5) assurant la réflexion des faisceaux optiques en direction dudit miroir (3) et la transmission des faisceaux optiques provenant dudit miroir (3).

6. Imageur selon la revendication 5, **caractérisé en ce que** ledit agencement optique comprend un contre prisme (6) sur lequel est déposé ledit traitement séparateur de polarisation (5).

## Claims

1. An optical imager comprising a waveguide (1) comprising a front face (1A) and a back face (1B), and wherein optical beams emitted by an optical element (2) of an optical beam generating system are introduced through an input surface (1C) and directed towards the eye (O) of the wearer across said rear face via an optical arrangement in order to allow viewing of information contents, said front (1A) and back (1B) faces of the waveguide having a property of reflectance and transmittance angular selectivity, and said optical arrangement comprising a Mangin mirror (3) and a quarter wave plate (4) between said front face and said mirror, **characterized in that** said quarter wave plate (4) is encapsulated between said mirror and another element, and **in that** said other element is an optical isolation treatment carried by said front face.

2. The imager according to claim 1, **characterized in that** said input surface (1C) is inclined, with the first reflection of the optical beams taking place on said front face.

3. The imager according to the preceding claim, **characterized in that** said optical element (2) has an emission surface parallel to said input surface (1C).

4. The imager according to any of the preceding claims, **characterized in that** the material of said Mangin mirror (3) is different from that of said waveguide (1).

5. The imager according to any of the preceding claims, **characterized in that** said optical arrangement comprises an inclined polarization separating treatment (5) ensuring the reflection of the optical beams in the direction of said mirror (3) and the transmission of the optical beams from said mirror (3).

6. The imager according to claim 5, **characterized in that** said optical arrangement comprises a counter prism (6) on which said polarization separating treatment (5) is deposited.

## Patentansprüche

1. Optischer Bildgenerator, umfassend einen Wellenleiter (1), der eine Vorderseite (1A) und eine Rückseite (1B) umfasst, und wobei optische Strahlen, die von einem optischen Element (2) eines Systems zum Erzeugen optischer Strahlen ausgesendet werden, durch eine Eingangsfläche (1C) eingeführt und auf das Auge (O) des Trägers gerichtet werden, und zwar durch die Rückseite hindurch über eine optische Anordnung, um die Visualisierung eines Informationsinhalts zu ermöglichen, wobei die Vorderseite (1A) und die Rückseite (1B) des Wellenleiters eine Eigenschaft der Winkelselektivität für Reflexionsvermögen und Transmissionsgrad aufweisen, und die optische Anordnung einen Mangin-Spiegel (3) und ein Halbwellenlängenplättchen (4) zwischen der Vorderseite und dem Spiegel umfasst, **dadurch gekennzeichnet, dass** das Halbwellenlängenplättchen (4) zwischen dem Spiegel und einem anderen Element eingekapselt ist, und dass das andere Element eine optische Isolationsbehandlung ist, die von der Vorderseite getragen wird.

2. Bildgerät nach Anspruch 1, **dadurch gekennzeichnet, dass** die Eingangsfläche (1C) geneigt ist, wobei die erste Reflexion der optischen Strahlen an der Vorderseite erfolgt.

3. Bildgerät nach dem vorhergehenden Anspruch, **dadurch gekennzeichnet, dass** das optische Element (2) eine Sendefläche aufweist, die zur Eingangsfläche (1C) parallel ist.

4. Bildgerät nach einem der vorhergehenden Ansprüche, **dadurch gekennzeichnet, dass** das Material des Mangin-Spiegels (3) anders ist als das des Wellenleiters (1).

5. Bildgerät nach einem der vorhergehenden Ansprüche, **dadurch gekennzeichnet, dass** die optische Anordnung eine geneigte polarisationstrennende Behandlung (5) umfasst, welche die Reflexion der optischen Strahlen in Richtung auf den Spiegel (3) und die Übertragung der optischen Strahlen vom Spiegel (3) her sicherstellt.

6. Bildgerät nach Anspruch 5, **dadurch gekennzeichnet, dass** die optische Anordnung ein Gegenprisma (6) umfasst, auf dem die polarisationstrennende Behandlung (5) aufgetragen wird.
